(19) Europäisches Patentamt / European Patent Office / Office européen des brevets

(11) **EP 3 511 369 B1**

(12) **EUROPEAN PATENT SPECIFICATION**

(45) Date of publication and mention
of the grant of the patent:
**07.06.2023 Bulletin 2023/23**

(21) Application number: **17848694.0**

(22) Date of filing: **04.09.2017**

(51) International Patent Classification (IPC):
***C08J 9/08*** *(2006.01)*     ***C08J 9/36*** *(2006.01)*

(52) Cooperative Patent Classification (CPC):
**C08J 9/0061; C08J 9/0066; C08J 9/08; C08J 9/36;**
**C08J 9/365;** C08J 2201/03; C08J 2203/02;
C08J 2300/22; C08J 2323/12; C08J 2423/06

(86) International application number:
**PCT/JP2017/031710**

(87) International publication number:
**WO 2018/047754 (15.03.2018 Gazette 2018/11)**

(54) **METHOD FOR PRODUCING SHEET**

VERFAHREN ZUR HERSTELLUNG EINER FOLIE

MÉTHODE DE PRODUCTION D'UNE FEUILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.09.2016 JP 2016176735**

(43) Date of publication of application:
**17.07.2019 Bulletin 2019/29**

(73) Proprietor: **TBM Co., Ltd.**
**Tokyo 100-0006 (JP)**

(72) Inventors:
• **SUMI Yuichiro**
**Tokyo 104-0061 (JP)**
• **KUROKI Shigeki**
**Tokyo 104-0061 (JP)**

(74) Representative: **Papula Oy**
**P.O. Box 981**
**00101 Helsinki (FI)**

(56) References cited:
| | |
|---|---|
| **WO-A1-2012/165311** | **WO-A1-2016/084888** |
| **GB-A- 2 211 191** | **GB-A- 2 395 719** |
| **JP-A- H 051 165** | **JP-A- H0 966 564** |
| **JP-A- S5 041 968** | **JP-A- S5 041 968** |
| **JP-A- S5 065 572** | **JP-A- S5 065 572** |
| **JP-A- 2006 152 271** | **JP-A- 2006 257 307** |
| **JP-A- 2006 257 307** | **JP-A- 2007 304 516** |
| **JP-A- 2008 280 359** | **JP-A- 2008 280 359** |
| **JP-A- 2015 052 045** | **JP-A- 2016 135 861** |
| **JP-B1- S4 842 456** | **US-A1- 2004 198 854** |

**Description**

Field

The present invention relates to a method for producing a sheet.

Background

As the plastic sheet, a material that is thin but white and opaque, has lightweight and water resistance, and has a smooth surface is frequently required. Examples of the applications of the sheet extensively include printing applications such as posters, building decoration application such as wallpapers, and processing applications such labels. The sheet has been also expected as seeds for the development of new functional materials.
In particular, the wallpaper, which is used as a material for building decoration in a large quantity, frequently has a foamed resin layer provided on a substrate called a backing paper due to designability and durability. In particular, the foamed resin layer made of a vinyl chloride resin has become a common component of commercial wallpapers because the foamed resin layer is relatively inexpensive, difficult to burn, and easy to apply.
A printed layer is provided on the foamed resin layer and embossed pattern is further formed. Therefore, the foamed layer is desirably white and has a smooth surface. These properties conform to the concept of the development of the above material.
For considering the new materials as described above, the plastic foam layers serve as a useful reference.
Various resins are used for the foam layer of the plastics and production methods are also diverse.
In a melting and foaming molding method, which is considered as a method for producing the sheet, the sheet is continuously molded while a gas is being blown into an extruder. This method is referred to as a one-step method. The one-step method, however, is frequently carried out by connecting two extruders, kneading raw materials in the first extruder, and introducing a foaming agent in the second extruder and mixing the resultant mixture. In addition to this method, a method for dissolving gas into a resin composition by high pressure processing and then forming the resin composition has been known (for example, Patent Literature 1).

Citation List

Patent Literature

Patent Literature 1: Japanese Patent Application Laid-open No. 2001-98103

Summary

Technical Problem

The above method for producing a foamed sheet is a troublesome task and thus a method for producing a foamed sheet having a relatively simple process is required to be developed.
The present invention has been made to solve the above problems and an object of the present invention is to provide a method for producing a foamable sheet with a convenient process.

Solution to Problem

The inventors of the present invention have found that a foamed sheet can be conveniently obtained by molding a resin composition including a thermoplastic resin and inorganic substance particles in a ratio of 80:20 to 20:80 and further including a foaming agent into a sheet-like product, and thereafter stretching the sheet. More specifically, the present invention provides the followings.
A method for producing a sheet, the method includes the steps of:

molding a resin composition including a thermoplastic resin and inorganic substance particles in a ratio of 80:20 to 20:80 and further including a foaming agent into a sheet-like product; and
stretching the sheet after being molded, in which the foaming agent is a thermally decomposable foaming agent that acts as a foam nucleating agent and includes a crystalline polyethylene resin as a carrier resin and a hydrogencarbonate as an active components

A further object of present invention is a method for producing a foamed sheet, the method includes the steps of:

kneading a resin mixture including a thermoplastic resin and inorganic substance particles having an average particle diameter of 1 $\mu$m to 15 $\mu$m in a ratio of 80:20 to 20:80 and further including additives including a lubricating agent to provide kneaded pellets; and

adding a thermally decomposable foaming agent that acts as a foam nucleating agent and includes a polyethylene resin as a carrier resin, in an amount of 0.04% to 1% relative to the resin in terms of a hydrogencarbonate as an active component, and kneading and extrusion-molding the resultant mixture at a temperature of 30°C to 45°C higher than the decomposition temperature of the foaming agent.

Advantageous Effects of Invention

According to the present invention, the method for producing a foamable sheet with a convenient process can be provided.

Description of Embodiments

Hereinafter, the embodiment of the present invention will be described. The present invention, however, is not particularly limited thereto.

<Method for producing sheet>

The method for producing a sheet according to the present invention includes the steps of: molding a resin composition including a thermoplastic resin and inorganic substance particles in a ratio of 80:20 to 20:80 and further including a foaming agent into a sheet-like product; and stretching the sheet after being molded.

(Step of molding)

The step of molding according to the present invention is the step of molding a resin composition including a thermoplastic resin and inorganic substance particles in a ratio of 80:20 to 20:80 and further including a foaming agent into a sheet-like product.

In the step of molding, the thermoplastic resin included in the resin composition is not particularly limited. The thermoplastic resin may be selected from resins such as polyethylene (high density polyethylene, low density polyethylene), polypropylene, polystyrene, and polyethylene terephthalate. Among applicable thermoplastic resins, a polypropylene resin and a polyethylene resin are preferably used. The polypropylene resin is particularly preferably used.

In the step of molding, examples of the inorganic particles included in the resin composition include calcium carbonate, titanium oxide, silica, clay, talc, kaolin, aluminum hydroxide. Calcium carbonate is particularly preferable. These inorganic particles may be used singly or in combination of two or more types of the inorganic particles. In order to improve dispersibility or reactivity of the inorganic particles, the surface of the inorganic particles may be previously modified in accordance with common methods.

In the step of molding, the blend ratio (ratio by mass) of the thermoplastic resin and the inorganic substance particles included in the resin composition is not particularly limited as long as the ratio is within 80:20 to 20:80. The ratio is preferably 70:30 to 30:70, more preferably 60:40 to 30:70, further preferably 50:50 to 35:65, and particularly preferably 57:43 to 37:63.

In the present invention, the inorganic substance particles act as a nucleating agent.

The average particle diameter of the inorganic particles is preferably 0.1 $\mu$m or larger and 50 $\mu$m or smaller and more preferably 1.0 $\mu$m or larger and 15 $\mu$m or smaller. The average particle diameter of the inorganic particles in the present invention is 50% particle diameter obtained from a cumulative percent distribution curve (d50) measured by a laser-diffraction particle size distribution measuring apparatus.

As the foaming agent, a foaming agent in which the active component of a foaming agent is included in a carrier resin is used. The carrier resin is a crystalline polyethylene resin. The active component is hydrogencarbonate. The foaming agent is preferably a foaming agent concentrate including the crystalline polyethylene resin as the carrier resin and the hydrogencarbonate as the thermally decomposable foaming agent.

Melting the resin composition including the thermoplastic resin and the inorganic substance particles at a higher temperature than the melting temperature of the carrier resin such as the crystalline polyethylene resin causes the foaming agent concentrate including the carrier resin having higher melt viscosity than that of the thermoplastic resin to form a closed cell product enclosed in the polyethylene in the phase of the thermoplastic resin. Therefore, the foamed product is retained in the process of kneading. Consequently, the carrier resin included in the foaming agent having a higher melt viscosity than that of the thermoplastic resin is preferably used.

In the step of molding, the content of the foaming agent included in the resin composition may be appropriately determined depending on the amounts and types of the thermoplastic resin, the inorganic substance particles, and the active component, and the like. However, selecting the content from the range of 0.04% to 5% relative to the mass of the resin composition tends to provide excellent results.

In order to find optimum conditions for use of the foaming agent, the inventors of the present invention have intensively carried out experiments to obtain the following results. As the foaming agent, POLYTHLENE EE275F manufactured by EIWA CHEMICAL IND. CO., LTD. has been used. This concentrate is a hydrogencarbonate-based foaming agent that is a thermally decomposable foaming agent and includes the crystalline polyethylene resin as the carrier resin. The content of the active component is 20% to 30%.

The following phenomena are found when polypropylene homopolymer is selected as the thermoplastic resin and the resin composition is extruded under the conditions as described in Examples to form a sheet.

(1) In the case where the amount of the concentrate is 1% (relative to the amount of the resin), an excellent foamed sheet is obtained at a molding temperature of 195°C or lower, whereas clear holes are formed in the molded sheet not only at a molding temperature of 215°C as described in Example 4 described below but also at a molding temperature of 205°C.
(2) In the case where the amount of the concentrate is 2% relative to the amount of the resin, the holes described above are formed even at an extrusion-molding temperature of 195°C.

From the above results, from the viewpoint of appearance (whiteness, transparency, and presence or absence of holes), preferable adequate conditions for mixing the foaming agent in an extrusion-molding apparatus and foaming the extruded product at the exit of a die are an extrusion-molding temperature of 30°C to 45°C higher than the decomposition temperature of the carrier resin in the foaming agent and an amount of the foaming agent to be added of 0.2% to 1.5% (a net amount of 0.04% to 0.5%) relative to the resin composition in the case where the conditions are using the thermoplastic resin and the inorganic substance particles in this specification, mixing both of the thermoplastic resin and the inorganic substance particles, and kneading the resultant mixture. In particular, these conditions are preferable in the case where the foaming agent in which the crystalline polyethylene resin serves as the carrier resin and the hydrogencarbonate serves as the active component is used. The conditions are particularly preferable in the case where the polypropylene resin is used as the thermoplastic resin.

The resin composition in the present invention may include one or more auxiliary agents selected from a lubricating agent, an antioxidant, an ultraviolet absorber, a pigment for coloring, a dispersant, an antistatic agent, a flame retardant, and the like within a range not contrary to the object, in addition to the thermoplastic resin, the inorganic particles, and the foaming agent described above.

The method for obtaining the resin composition is not particularly limited and is appropriately determined depending on molding methods (for example, extrusion molding, injection molding, and vacuum molding). For example, the thermoplastic resin and the inorganic particles may be kneaded and melted and the foaming agent may be added before these components are charged to the molding apparatus from a hopper, or the thermoplastic resin, the inorganic particle, and the foaming agent may be molded, and at the same time, kneaded and melted integrally in a molding apparatus. In melting and kneading, the resin composition is preferably kneaded by applying high shear stress from the viewpoint of uniformly dispersing the inorganic particles in the thermoplastic resin. For example, the kneading is carried out using a twin screw extruder.

In the method according to the present invention, the resin composition may be processed through the form of pellets or is not necessarily processed through the form of pellets. Preferably, the resin composition is not processed through the form of pellets. Conventionally, a method including the steps of kneading the thermoplastic resin, the inorganic substance particles, the lubricating agent, the additives, and the like, pelletizing the resultant mixture using extrusion-molding, adding the foaming agent to the mixed pellets, and melting and kneading the resultant mixture again to carrying out extrusion molding has been carried out. In such a method, kneading is carried out two times and thus excessive operation is required and excessive manpower is needed. The amount of energy to be required also increases and, in addition, thermal degradation of the thermoplastic resin proceeds. In the present invention, however, the resin composition can be molded by directly charging all the raw materials including the foaming agent into a twin screw kneading extruder without processing the resin composition through the form of the mixed pellets. Consequently, various troublesome tasks can be eliminated, the amount of energy to be required can be reduced, and thermal degradation of the thermoplastic resin can be reduced. The inventors of the present invention have found that the foamed sheet can be also produced in the direct method described above by, for example, changing the order of charge depending on the raw materials.

The molding method is not particularly limited and conventionally known molding methods (for example, extrusion molding) can be used as long as the molding method is a method for molding a sheet-like product. In particular, considering the smoothness of the surface of the sheet, a method for producing a sheet by extrusion-molding the sheet with an extruder is preferably employed. In order to form fine cells in the sheet by this method, first, fine inorganic substance particles are preferably used as a nucleating agent and, further, a foam nucleating agent that can shape into fine cells is preferably used together with the nucleating agent. Mixing the fine inorganic substance particles is also useful for improving opacity.

Specifically, the foamed sheet is particularly preferably formed by selecting the inorganic substance particles having an average particle diameter of 1 $\mu$m to 15 $\mu$m, selecting and adding the thermally decomposable foaming agent as the foaming agent acting as the foam nucleating agent to the resin composition prepared by kneading the thermoplastic resin and the inorganic substance particles and including the crystalline polyethylene resin as the carrier resin, and extrusion-molding the resultant mixture to mold a foamed sheet.

For molding, a direct method in which the step of kneading and the step of molding the resin composition into a sheet-like product are continuously carried out may be used. For example, a method for using a twin screw extrusion-molding apparatus having a T die system may be employed.

<Step of stretching>

The present invention further includes the step of stretching the sheet after being molded.

The density of the sheet is decreased by stretching (for example, longitudinal stretching and/or transverse stretching) the foamed sheet after being molded. The foaming in the sheet becomes excellent due to the decrease in the density. According to the present invention, the sheet having excellent foaming can be obtained by such convenient steps.

As described in Examples described below, the density of the foamed sheet is decreased from 1.0 to 1.3 to from 0.63 to 0.86 in the case where the sheet is stretched to 1.5 times × 1.5 times by simultaneous longitudinal and transverse biaxial stretching. From this result, the foaming ratio is 1.5 times to 2.0 times just after molding and 3.2 times by stretching. These foaming ratios are obtained by calculation using the density of the resin composition before adding the foaming agent and the density of the resin composition after foaming. As described above, the foaming ratio becomes higher by stretching.

The method for stretching is not particularly limited. The stretching may be any stretching processes of uniaxial stretching in the longitudinal direction or the transverse direction, or sequential biaxial stretching or simultaneous biaxial stretching in the longitudinal and transverse directions. The longitudinal stretching and/or the transverse stretching is preferable. As described above, the density can be particularly easily decreased by applying the longitudinal stretching and/or the transverse stretching of the foamed sheet after being molded. The density can be decreased to 0.5 or lower at a stretching ratio of 4 times to 5 times. Observation of the foaming state of thus stretched sheet allows continuous foams to be recognized.

The stretching may be appropriately determined depending on a desired resin molded article. For example, the stretching may be any stretching processes of uniaxial stretching in the longitudinal direction or the transverse direction, or sequential biaxial stretching or simultaneous biaxial stretching in the longitudinal and transverse directions. The sequential biaxial stretching or the simultaneous biaxial stretching is preferable. The stretching ratio in the longitudinal direction or the transverse direction after stretching is preferably 1.1 times or higher and 6.0 times or lower and particularly preferably 1.2 times or higher and 5 times or lower in the longitudinal direction and/or the transverse direction.

The required stretching ratio can be determined by calculation. The stretching ratio (X times in the longitudinal direction and Y times in the transverse direction) can be determined in accordance with the following formula by measuring the weight of the resin composition before stretching per 1 square meter (also referred to as basis weight) W (g/m$^2$) and using an apparent density D, a longitudinal/transverse ratio R (a ratio of the stretching ratios in the longitudinal direction and the transverse direction) determined in the production plan, and a target value T (cm) of the thickness of the product after the transverse stretching and the resin composition can be stretched. In addition, the stretching ratio can be easily estimated by the operating experience for each device.

$$\text{(Formula 1)}$$

$$X^2 = W \times 10^{-4}/(D \times Z \times R \times T)$$

X = RY

where D: Apparent density determined in production plan

R: Longitudinal/transverse ratio (ratio of stretching ratios in longitudinal direction and transverse direction) determined in production plan

W: Weight of thin film material before longitudinal stretching per 1 square meter (g)

X: Stretching ratio in longitudinal direction

Y: Stretching ratio in transverse direction

Z: Shrinkage ratio or elongation ratio of sheet in length of transverse direction caused by longitudinal stretching

The applications of the sheet obtained according to the present invention is not particularly limited. For example, cardboard can be produced by utilizing the sheet obtained by the method according to the present invention and thus the method according to the present invention is suitable for producing the sheet for cardboard. In such a case, as the production method, the foamed sheet is produced by the method of the present application and the cardboard is produced, for example, by a method for producing plastic cardboard. The sheet obtained according to the present invention may be used for other applications. For example, the sheet is suitable for a building decoration sheet (in particular, a sheet including no backing paper).

The surface of sheet obtained according to the present invention can be coated to carry out printing such as gravure printing, flexographic printing, and rotogravure printing and the various digital prints. As described above, the method according to the present invention is suitable for producing the sheet for printing.

The sheet for gravure printing is coated with a clay latex-based coating liquid using a coating machine. For the sheet for various digital prints, a coating liquid suitable for each printer can be applied using a coating machine.

According to the present invention, the sheet including fine foam particles can be obtained by adding the foaming agent to the resin composition prepared by kneading the inorganic substance particles and the thermoplastic resin and molding the resultant mixture with an extruder.

The sheet having a low density (for example, 1.0 to 0.5) can be obtained by stretching this sheet in a longitudinal direction and/or transverse direction.

The method according to the present invention allows the foamed sheet to be prepared in the process of sheet molding using an extruder. In the process in which the sheet including filler in high concentration is produced and the stretching process is included, the foamed sheet having a density of 0.5 or lower and a foaming ratio of higher than 5 times can be prepared by directly using this process.

<Sheet>

A sheet including the thermoplastic resin and the inorganic substance particles in a ratio of 80:20 to 20:80 and having a density of 1.0 or lower can be prepared according to the method of the invention.

According to the method for producing described above, a low density sheet having a density of 1.0 or lower can be produced. The unit of the density is g/cc.

The density of the sheet is not particularly limited as long as the density is 1.0 or lower. The density is preferably 0.9 or lower (for example, 0.8 or lower, 0.7 or lower, 0.6 or lower, 0.5 or lower, 0.4 or lower, or 0.3 or lower). The density of the sheet may be 0.1 or higher (for example, 0.2 or higher or 0.3 or higher). Example

<Examples 1 and 2 and Comparative Examples 1 and 2>

A polypropylene homopolymer (EA9, manufactured by Japan Polypropylene Corporation) (abbreviated as PP1) was used as the polypropylene resin, Lighton S-4 (manufactured by BIHOKU FUNKA KOGYO CO., LTD., average particle diameter 2.2 $\mu$m) (abbreviated as CC1) was used as calcium carbonate, and magnesium stearate (abbreviated as MS1) was used as the lubricating agent.

Using a co-rotating twin screw kneading extruder HK-25D (screw diameter 25 mm, L/D = 41) manufactured by Parker Corporation, Inc., the PP1 resin was charged using a loss-in weight vibrating feeder from uppermost stream and CC1 and MS1 were charged from the middle part of the cylinder using a loss-in weight twin screw feeder. Strands were extruded and the extruded strands were cut after cooling to form pellets. The cylinder temperature at charged part of the PP1 resin was set to 150°C and the cylinder temperature at the charged part of CC1 and MS1 was set to 190°C to 200°C.

To thus prepared pellets, POLYTHLENE EE275F (decomposition temperature 155°C, amount of gas to be generated 230 ml/5 g) manufactured by EIWA CHEMICAL IND. CO., LTD. was added as the chemical foaming agent. The resultant mixture was extruded with a single screw T die extrusion-molding apparatus (LABO PLASTOMILL, manufactured by Toyo Seiki Seisaku-sho, Ltd., screw diameter 20 mm, L/D = 25) at 195°C to mold a sheet.

The sheet was simultaneously biaxially stretched at 125°C in a stretching ratio of 1.5 times × 1.5 times in the longitudinal and transverse directions at 7 mm/minute using a simultaneous biaxial stretcher IMC-11A9 manufactured by IMOTO MACHINERY CO., LTD. (Examples 1 and 2). The sheets not simultaneously biaxially stretched were used as Comparative Examples 1 and 2. Hereinafter, Examples 1 and 2 and Comparative Examples 1 and 2 will be described.

(Example 1)

EE275F was added to the pellets prepared in a ratio of PP1/CC1/MS1 = 40/60/0.5 in an amount of 1% by weight relative to PP1 and the resultant mixture was extruded at 195°C to mold a sheet. The obtained sheet was simultaneously biaxially stretched at 1.5 times × 1.5 times. The stretched sheet had a thickness of 686 $\mu$m and a density

of 0.625.

(Example 2)

EE275F was added to the pellets prepared in a ratio of PP1/CC1/MS1 = 40/60/0.5 in an amount of 0.5% by weight relative to PP1 and the resultant mixture was extruded at 195°C to mold a sheet. The obtained sheet was simultaneously biaxially stretched at 1.5 times × 1.5 times. The stretched sheet had a thickness of 431 μm and a density of 0.864.

(Comparative Example 1)

EE275F was added to the pellets prepared in a ratio of PP1/CC1/MS1 = 40/60/0.5 in an amount of 1% by weight relative to PP1 and the resultant mixture was extruded at 195°C to mold a sheet. The extruded sheet had a thickness of 736 μm and a density of 1.034.

(Comparative Example 2)

EE275F was added to the pellets prepared in a ratio of PP1/CC1/MS1 = 40/60/0.5 in an amount of 0.5% by weight relative to PP1 and the resultant mixture was extruded at 195°C to mold a sheet. The extruded sheet had a thickness of 507 μm and a density of 1.294.

As described above, the sheets had densities of higher than 1.0 in Comparative Examples 1 and 2, in which the sheets were not stretched, whereas the sheets had lower densities in Examples 1 and 2, in which the sheets were stretched. From these results, it has been found that, in the case where the sheet includes a large amount of the inorganic filler, an excellent foamed product having a low density can be obtained by adding the foaming agent and stretching.

[Table 1]

| | Amount of foaming agent (relative to resin) (% by weight) | Extrusion temperature (°C) | Foaming |
|---|---|---|---|
| Example 1 | 1.0 | 195 | ○ |
| Example 2 | 0.5 | 195 | ○ |
| Comparative Example 1 | 1.0 | 195 | × |
| Comparative Example 2 | 0.5 | 195 | × |

<Examples 3 and 4>

The sheets were produced in the same procedures in Examples 1 and 2 except that the amount of the foaming agent to be added and the extrusion temperature were changed (Example 3 and 4 described below).

(Example 3)

EE275F was added to the pellets prepared in a ratio of PP1/CC1/MS1 = 40/60/0.5 in an amount of 2% by weight relative to PP1 and the resultant mixture was extruded at 195°C to mold a sheet. After molding the sheet, simultaneous biaxial stretching was carried out at a stretching ratio of 1.5 times × 1.5 times to provide an excellent foamed product. Holes having sizes of about several hundred micrometers, however, were generated in the entire sheet before stretching.

(Example 4)

EE275F was added to the pellets prepared in a ratio of PP1/CC1/MS1 = 40/60/0.5 in an amount of 1% by weight relative to PP1 and the resultant mixture was extruded at 215°C to mold a sheet. After molding the sheet, simultaneous biaxial stretching was carried out at a stretching ratio of 1.5 times × 1.5 times to provide an excellent foamed product. However, holes having sizes of about several hundred micrometers were generated in the entire sheet before stretching.

[Table 2]

|  | Amount of foaming agent (relative to resin) (% by weight) | Extrusion temperature (°C) | Appearance of sheet (including whiteness and opacity) | Stretchability | Foaming |
|---|---|---|---|---|---|
| Example 1 | 1.0 | 195 | Good | ○ | ○ |
| Example 2 | 0.5 | 195 | Good | ○ | ○ |
| Example 3 | 2.0 | 195 | Poor | Δ | ○ |
| Example 4 | 1.0 | 215 | Poor | Δ | ○ |

As listed in Table 2, it has been found that the conditions described in Examples 1 and 2 are preferable from the viewpoint of appearance (whiteness, transparency, and presence or absence of holes) and no hole generation and thus are suitable for stretching.

<Example 5>

(Example 5)

The sheet was produced in the same method as the method in Example 2 except that the stretching ratio in Examples 2 was changed to 2.5 times.
The sheet produced according to the method in Example 5 had a low density of 0.402.

## Claims

1.  A method for producing a sheet, the method comprising the steps of:

    molding a resin composition including a thermoplastic resin and inorganic substance particles in a ratio of 80:20 to 20:80 and further including a foaming agent, into a sheet-like product; and
    stretching the sheet after being molded, wherein the foaming agent is a thermally decomposable foaming agent that acts as a foam nucleating agent and includes a crystalline polyethylene resin as a carrier resin and a hydrogencarbonate as an active component.

2.  The method according to claim 1, wherein the amount of the hydrogencarbonate in the foaming agent is 0.04% by mass to 1% by mass relative to the total mass of the resin composition.

3.  The method according to claim 1 or 2, wherein the step of molding into a sheet-like product includes the step of extruding the resin composition at a temperature of 30°C to 45°C higher than the decomposition temperature of a polyethylene resin in the foaming agent.

4.  The method according to any one of claims 1 to 3, wherein the sheet after being molded is stretched in a ratio of 1.2 times to 5 times in a longitudinal direction and/or a transverse direction.

5.  The method according to any one of claims 1 to 4, wherein the inorganic substance particles include calcium carbonate particles.

6.  The method according to any one of claims 1 to 5, wherein the method is a method for producing a sheet for cardboard.

7.  The method according to any one of claims 1 to 5, wherein the method is a method for producing a sheet for building decoration.

8.  The method according to claim 7, wherein the method is a method for producing a sheet including no backing paper.

9. The method according to any one of claims 1 to 8, further comprising the step of applying a clay latex-based coating liquid or a coating liquid suitable for digital printing onto a surface of the sheet after stretching.

10. The method according to claim 1, wherein the step of molding into a sheet-like product includes mixing the foaming agent at an extrusion-molding temperature of 30°C to 45°C higher than the decomposition temperature of the carrier resin in the foaming agent and an amount of the foaming agent to be added of 0.2% to 1.5% (a net amount of 0.04% to 0.5%) relative to the resin composition, and mixing both of the thermoplastic resin and the inorganic substance particles, and kneading the resultant mixture.

11. A method for producing a foamed sheet, the method comprising the steps of:

kneading a resin mixture including a thermoplastic resin and inorganic substance particles having an average particle diameter, being the 50% particle diameter obtained from a cumulative percent distribution curve (d50) measured by a laser-diffraction particle size distribution measuring apparatus, of 1 μm to 15 μm in a ratio of 80:20 to 20:80 and further including additives including a lubricating agent to provide kneaded pellets; and adding a thermally decomposable foaming agent that acts as a foam nucleating agent and includes a polyethylene resin as a carrier resin, in an amount of 0.04% to 1% relative to the resin in terms of a hydrogencarbonate as an active component, and kneading and extrusion-molding the resultant mixture at a temperature of 30°C to 45°C higher than the decomposition temperature of the foaming agent.

12. A method for stretching the sheet obtained by the method as claimed in claim 11 in a ratio of 1.2 times to 5 times in a longitudinal direction and/or a transverse direction.

13. The method for producing a sheet according to claim 11, wherein the thermoplastic resin, the inorganic substance particles, and the additives including the lubricating agent are directly charged into a kneading-extrusion-molding apparatus, the thermally decomposable foaming agent as claimed in claim 12 is added during the process of kneading, and the sheet is formed not through the form of mixed pellets.


**Patentansprüche**

1. Verfahren zur Herstellung einer Folie, wobei das Verfahren die folgenden Schritte umfasst:

Formen einer Harzzusammensetzung, die ein thermoplastisches Herz und Partikel einer anorganischen Substanz in einem Verhältnis von 80:20 bis 20:80 enthält und ferner ein Schaummittel enthält, in ein folienartiges Produkt; und
Strecken der Folie nach dem Formen, wobei das Schaummittel ein thermisch zersetzbares Schaummittel ist, das als ein Schaumnukleationsmittel wirkt und ein kristallines Polyethylenharz als ein Trägerharz und ein Hydrogenkarbonat als eine aktive Komponente enthält.

2. Verfahren nach Anspruch 1, wobei die Menge des Hydrogenkarbonats in dem Schaummittel 0,04 Massen-% bis 1 Massen-% relativ zur Gesamtmasse der Harzzusammensetzung ist.

3. Verfahren nach Anspruch 1 oder 2, wobei der Schritt des Formens in ein folienartiges Produkt den Schritt des Extrudierens der Harzzusammensetzung bei einer Temperatur von 30° C bis 45° C höher als die Zersetzungstemperatur eines Polyethylenharzes in dem Schaummittel umfasst.

4. Verfahren nach einem der Ansprüche 1 bis 3, wobei die Folie nach dem Formen in einem Verhältnis von 1,2 mal bis 5 mal in einer Längsrichtung und/oder einer Querrichtung gestreckt wird.

5. Verfahren nach einem der Ansprüche 1 bis 4, wobei die Partikel der anorganischen Substanz Calciumkarbonat-Partikel enthalten.

6. Verfahren nach einem der Ansprüche 1 bis 5, wobei das Verfahren ein Verfahren zur Herstellung einer Folie für Karton ist.

7. Verfahren nach einem der Ansprüche 1 bis 5, wobei das Verfahren ein Verfahren zur Herstellung einer Folie zur Gebäudedekoration ist.

**8.** Verfahren nach Anspruch 7, wobei das Verfahren ein Verfahren zur Herstellung einer Folie ist, die kein Trägerpapier enthält.

**9.** Verfahren nach einem der Ansprüche 1 bis 8, ferner umfassend den Schritt des Aufbringens einer latexbasierten Tonbeschichtungsflüssigkeit oder einer Beschichtungsflüssigkeit, die für Digitaldruck geeignet ist, auf eine Oberfläche der Folie nach dem Strecken.

**10.** Verfahren nach Anspruch 1, wobei der Schritt des Formens in ein folienartiges Produkt ein Mischen des Schaummittels bei einer Extrusionsformtemperatur von 30° C bis 45° C höher als die Zersetzungstemperatur des Trägerharzes in dem Schaummittel sowie eine Menge des hinzuzufügenden Schaummittels von 0,2 % bis 1,5 % (Nettomenge von 0,04 % bis 0,5%) relativ zu der Harzzusammensetzung umfasst, und ein Mischen sowohl des thermoplastischen Harzes als auch der Partikel aus der anorganischen Substanz, und ein Kneten der resultierenden Mischung.

**11.** Verfahren zur Herstellung einer geschäumten Folie, wobei das Verfahren die folgenden Schritte umfasst:

Kneten einer Harzmischung, umfassend ein thermoplastisches Harz und Partikel einer anorganischen Substanz mit einem mittleren Partikeldurchmesser, der der 50%-Partikeldurchmesser ist, erhalten aus einer kumulativen Prozentverteilungskurve (d50), gemessen mit einem Laserbeugungspartikelgrößenverteilungsmessgerät, von 1μm bis 15 μm in einem Verhältnis von 80:20 bis 20:80, und ferner Additive enthält, die ein Schmiermittel umfassen, um geknetete Pellets bereitzustellen; und
Hinzufügen eines thermisch zersetzbaren Schaummittels, das als ein Schaumnukleationsmittel wirkt und ein Polyethylenharz als ein Trägerharz enthält, in einer Menge von 0,04 % bis 1% relativ zu dem Harz hinsichtlich eines Hydrogenkarbonats als eine aktive Komponente, und Kneten und Extrusionsformen der resultierenden Mischung bei einer Temperatur von 30° C bis 45° C höher als die Zersetzungstemperatur des Schaummittels.

**12.** Verfahren zum Strecken der durch das Verfahren nach Anspruch 11 erhaltenen Folie in einem Verhältnis von 1,2 mal bis 5 mal in einer Längsrichtung und/oder einer Querrichtung.

**13.** Verfahren zur Herstellung einer Folie nach Anspruch 11, wobei das thermoplastische Harz, die Partikel der anorganischen Substanz und die Additive, die das Schmiermittel umfassen, direkt in ein Knet-Extrusions-Formgerät geladen werden, das thermisch zersetzbare Schaummittel nach Anspruch 12 während des Knetprozesses hinzugefügt wird, und die Folie nicht durch die Form gemischter Pellets geformt wird.

**Revendications**

**1.** Procédé de fabrication d'une feuille, le procédé comprenant les étapes de :

moulage d'une composition de résine comprenant une résine thermoplastique et des particules de substance inorganique dans un rapport de 80:20 à 20:80 et comprenant en outre un agent moussant, en un produit en forme de feuille ; et
étirage de la feuille après moulage,
dans lequel l'agent moussant est un agent moussant thermiquement décomposable qui agit comme agent de nucléation de mousse et comprend une résine de polyéthylène cristallin en tant que résine de support et un hydrogénocarbonate en tant que composant actif.

**2.** Procédé selon la revendication 1, dans lequel la quantité d'hydrogénocarbonate dans l'agent moussant est de 0,04 % en masse à 1 % en masse par rapport à la masse totale de la composition de résine.

**3.** Procédé selon la revendication 1 ou 2, dans lequel l'étape de moulage en un produit en forme de feuille comprend l'étape d'extrusion de la composition de résine à une température de 30 °C à 45 °C au-dessus de la température de décomposition d'une résine de polyéthylène dans l'agent moussant.

**4.** Procédé selon l'une quelconque des revendications 1 à 3, dans lequel la feuille après avoir été moulée est étirée dans un rapport de 1,2 fois à 5 fois dans une direction longitudinale et/ou une direction transversale.

**5.** Procédé selon l'une quelconque des revendications 1 à 4, dans lequel les particules de substance inorganique comprennent des particules de carbonate de calcium.

**6.** Procédé selon l'une quelconque des revendications 1 à 5, dans lequel le procédé est un procédé de fabrication d'une feuille pour carton.

**7.** Procédé selon l'une quelconque des revendications 1 à 5, dans lequel le procédé est un procédé de fabrication d'une feuille pour la décoration de bâtiment.

**8.** Procédé selon la revendication 7, **caractérisé en ce que** le procédé est un procédé de fabrication d'une feuille ne comprenant pas de papier support.

**9.** Procédé selon l'une quelconque des revendications 1 à 8, comprenant en outre l'étape d'application d'un liquide d'enduction à base de latex d'argile ou d'un liquide d'enduction adapté pour l'impression numérique sur une surface de la feuille après étirage.

**10.** Procédé selon la revendication 1, dans lequel l'étape de moulage en un produit en forme de feuille comprend le mélange de l'agent moussant à une température de moulage par extrusion de 30 °C à 45 °C au-dessus de la température de décomposition de la résine de support dans l'agent moussant et une quantité d'agent moussant à ajouter de 0,2 % à 1,5 % (une quantité nette de 0,04 % à 0,5 %) par rapport à la composition de résine, et le mélange de la résine thermoplastique et des particules de substance inorganique, et le malaxage du mélange obtenu.

**11.** Procédé de production d'une feuille de mousse, le procédé comprenant les étapes de :

malaxage d'un mélange de résine comprenant une résine thermoplastique et des particules de substance inorganique ayant un diamètre de particule moyen, étant le diamètre de particule à 50 % obtenu à partir d'une courbe de distribution en pourcentage cumulée (d50) mesurée par un appareil de mesure de la distribution granulométrique de particules à diffraction laser de 1 $\mu$m à 15 $\mu$m dans un rapport de 80:20 à 20:80 et comprenant en outre des additifs comprenant un agent lubrifiant pour produire des granulés malaxés ; et
l'ajout d'un agent moussant thermiquement décomposable qui agit en tant qu'agent de nucléation de mousse et comprend une résine de polyéthylène en tant que résine de support, en une quantité de 0,04 % à 1 % par rapport à la résine en termes d'hydrogénocarbonate en tant que composant actif, et malaxage et moulage par extrusion du mélange résultant à une température de 30 °C à 45 °C au-dessus de la température de décomposition de l'agent moussant.

**12.** Procédé d'étirage de la feuille obtenue par le procédé selon la revendication 11 dans un rapport de 1,2 fois à 5 fois dans une direction longitudinale et/ou une direction transversale.

**13.** Procédé de fabrication d'une feuille selon la revendication 11, dans lequel la résine thermoplastique, les particules de substance inorganique, et les additifs comprenant l'agent lubrifiant sont chargés directement dans un appareil de malaxage-moulage par extrusion, l'agent moussant thermiquement décomposable selon la revendication 12 est ajouté pendant le processus de malaxage, et la feuille n'est pas formée par l'intermédiaire de la forme de granulés mélangés.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001098103 A